(19) Europäisches Patentamt

European Patent Office

Office européen des brevets

(11) Publication number: 0 187 496
A2

## (12) EUROPEAN PATENT APPLICATION

(21) Application number: 85309092.6

(22) Date of filing: 13.12.85

(51) Int. Cl.⁴: C01B 33/28

(30) Priority: 02.01.85 US 688398

(43) Date of publication of application:
16.07.86 Bulletin 86/29

(84) Designated Contracting States:
BE DE FR GB IT NL SE

(71) Applicant: MOBIL OIL CORPORATION
150 East 42nd Street
New York New York 10017(US)

(72) Inventor: Chang, Clarence Dayton
11 Murray Place
Princeton New Jersey 08540(US)
Inventor: Chu, Cynthia Ting-Wah
283 Westcott Boulevard
Pennington New Jersey 08534(US)

(74) Representative: West, Alan Harry
Mobil Court 3 Clements Inn
London WC2A 2EB(GB)

(54) Preparation of gallosilicate zeolites.

(57) A gallosilicate zeolite is prepared by treatment of a high silica gallium-free zeolite with a source of gallium in an aqueous solution having a pH no less than 7 at 50°-250°C. The product is then ammonium-exchanged and calcined to produce a catalyst with increased Bronsted acidity.

EP 0 187 496 A2

# PREPARATION OF GALLOSILICATE ZEOLITES

This invention relates to a process of preparing crystalline gallosilicate zeolites.

Natural and synthetic zeolitic materials are known to have catalytic properties for various types of hydrocarbon conversion. Certain zeolitic materials are ordered, porous crystalline aluminosilicates having a definite crystalline structure, as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimension while rejecting those of larger dimensions, these materials have come to be known as "molecular sieves", and are utilized in a variety of ways to take advantage of these properties.

Prior art techniques have resulted in the formation of a great variety of synthetic zeolites. The zeolites have come to be designated by letter or other convenient symbols, as illustrated by zeolite A (U. S. Patent No. 2,882,243), zeolite X (U. S. Patent No. 2,882,244), zeolite Y (U. S. Patent No. 3,130,007), zeolite ZK-5 (U. S. Patent No. 3,247,195), zeolite ZK-4 (U. S. Patent No. 3,314,752), zeolite ZSM-5 (U. S. Patent No. 3,702, 886), zeolite ZSM-11 (U. S. Patent No. 3,709,979), zeolite ZSM-12 (U. S. Patent No. 3,832,449), zeolite ZSM-20 (U. S. Patent No. 3,972,983), zeolite ZSM-35 (U. S. Patent No. 4,016,245), zeolite ZSM-38 (U. S. Patent No. 4,046,859) and zeolite ZSM-23 (U. S. Patent No. 4,076,842).

Synthetic zeolites have been prepared with a variety of structures and aluminum contents and, in recent years, zeolites have been prepared with particularly high silica contents, even to the extent of being substantially aluminum-free. ZSM-5 is one such example, wherein the silicon-aluminum atomic ratio is at least 2.5 and up to infinity. U. S. Patent No. 3,941,871 (U. S. Patent No. Re 29,948) discloses a porous crystalline silicate made from a reaction mixture containing no deliberately added aluminum and exhibiting an X-ray diffraction pattern characteristic of ZSM-5. In addition, zeolite structures have been synthesized with other elements, such as boron and gallium, replacing aluminum in the tetrahedral array.

The catalytic activity of zeolites relies on their acidity. Non-tetravalent atoms within the tetrahedral array, such as tri-valent aluminum, gallium or boron, create a positive charge deficiency, which can be compensated by a cation such as $H+$.

Gallium-containing zeolites are known; for example, U. S. Patents Nos. 3,755,538, 4,377,504, and 4,415,440 disclose zeolites either coated or mixed with gallium compounds. U.S. Patents Nos. 4,304,686, 4,350,835 and 4,392,989 disclose zeolites in which some or all of the cations have been exchanged for gallium ions. Further, U. S. Patents Nos. 4,427,577 and 4,435,608 disclose a gallium-modified silica zeolite prepared by gel crystallization.

However, although gallium-containing zeolites are known, the prior art does not disclose a method of inserting gallium directly into the tetrahedral array of a preformed high silica crystalline zeolite. The process of the present invention provides an economical method for forming a crystalline gallosilicate zeolite from an existing gallium-free crystalline silicate zeolite.

According to the invention, there is provided a process for preparing a crystalline gallosilicate zeolite from an existing gallium-free crystalline silicate zeolite comprising the step of contacting said gallium-free crystalline silicate zeolite with gallium in an aqueous solution having a pH of at least 7 at a temperature of 50-250°C.

The gallium-free silicate zeolite used in the process of the invention preferably has a silica to alumina mole ratio of at least 5,000, more preferably at least 20,000.

The gallium-free silicate zeolite employed in the present process preferably has a Constraint Index of 1 to 12, it being understood that the Contraint Index of a zeolite provides a convenient measure of the extent to which the zeolite provides control to molecules of varying sizes to its internal pore structure. Zeolites which provide a highly restricted access to and egress from its internal structure have a high value for the Constraint Index, and zeolites of this kind usually have pores of small size. On the other hand, zeolites which provide relatively free access to the internal zeolite structure have a low value for the Constraint Index. The method by which Constraint Index is determined is described in, for example, U. S. Patent No. 4,016,218. Examples of suitable zeolites having a Constraint Index with the required range are ZSM-5 (U.S. Patent No. 3702886 and Reissue No. 29949), ZSM-11 (U.S. Patent No. 3709979), ZSM-12 (U.S. Patent No. 3832449), ZSM-23 (U.S. Patent No. 4076342), ZSM-35 (U.S. Patent No. 4016245), ZSM-38 (U.S. Patent No. 4046859), ZSM-48 (U.S. Patent No. 4397827) and zeolite beta (U.S. Patent No. 3308069 and Reissue No. 28341), with ZSM-5 being preferred.

In a preferred aspect, the zeolite employed has a crystal framework density, in the dry hydrogen form, of at least 1.6 grams per cubic centimeter. The dry density for known structures may be calculated from the number of silicon plus aluminum atoms per 1000 cubic Angstroms, as given, e.g., on page 19 of the article on "Zeolite Structure" by W. M. Meier in "Proceedings of the Conference on Molecular Sieves, London, April 1967", published by the Society of Chemical Industry, London, 1968. When the crystal structure is unknown, the crystal framework density may be determined by classical pyknometer techniques.

The zeolite employed herein may be composited with a porous matrix material, such as alumina, silica-alumina, silica-magnesia, silica-zirconia, silica-thoria, silica-berylia, silica-titania, as well as ternary compositions such as silica-alumina-thoria, silica-alumina zirconia, silica-alumina-magnesia and silica-magnesia-zirconia. The matrix may be in the form of a cogel. The relative proportions of zeolite component and inorganic oxide gel matrix may vary widely, with the zeolite content ranging from between 1 to 99 wt %, and more usually in the range of 5 to 80 wt % of the composite.

It may be useful to incorporate the crystalline zeolite with a matrix material resistant to the temperature, and other conditions employed in the process. Such matrix material is useful as a binder and imparts greater resistance to the catalyst for the severe temperature, pressure and reactant feed stream velocity conditions encountered in, for example, many cracking processes. Useful matrix materials include both synthetic and naturally occurring substances, as well as inorganic materials, such as clay, silica and/or metal oxides. The latter may be either naturally occurring or in the form of gelatinous precipitates or gels, including mixtures of silica and metal oxides. Naturally occurring clays which can be composited with the zeolite include those of the montmorillonite and kaolin families, which families include the sub-bentonites and the kaolins commonly known as Dixie, McNamee Georgia and Florida clays, or others in which the main mineral constituent is halloysite, kaolinite, dickite, nacrite or anauxite. Such clays can be used in the raw state as originally mined or initially subjected to calcination, acid treatment or chemical modification.

The crystalline gallium-free silicate zeolite employed is contacted with a aqueous solution of a gallium compound having a pH of at least 7. The required pH can be achieved by, for example, the addition of NaOH to the solution.

Representative gallium-containing compounds include gallium acetate, gallium acetylacetonate, gallium bromide, gallium chloride, gallium fluoride, gallium iodide, gallium nitrate, gallium oxide, gallium sulfate and gallium sulfide, with gallium sulfate being preferred. Contact with the gallium-containing solution is effected at a temperature of from 50° to 250°C for a period of time of from about 0.5 hours to 8 days, and more preferably at 80° to 110°C for 1 hour to 2 days, to cause gallium to enter the tetrahedral framework of the zeolite. The resultant product is then washed, optimally calcined, converted into ammonium form by ion exchange with, e.g., ammonium nitrate, ammonium chloride or ammonium gas, dried, e.g., at about 100°C for about 8 to 24 hours and calcined to convert the ammonium form into the catalytically active hydrogen form. The amount of gallium incorporated in the zeolite should be at least about 0.25 wt %. However, it is preferred that the amount utilized be at least about 1.0 wt %, particularly when the zeolite is combined with a binder, e.g., 35 wt % of alumina. The amount of gallium can be as high as about 30 wt % or more, depending on the amount and type of binder present. Preferably, the amount of gallium added to the zeolite is between 1 and 20 wt %.

The amount of gallium incorporated with the zeolite by reaction with elemental gallium or gallium-containing compound will depend upon several factors. One of these is the reaction time, i.e., the time that the zeolite and the gallium-containing source are maintained in contact with each other. With greater reaction times, all other factors being equal, a greater amount of metal is incorporated with the zeolite. Other factors upon which the amount of gallium incorporated with the zeolite is dependent include reaction temperature, concentration of the treating compound in the reaction mixture, the degree to which the zeolite has been dried prior to reaction with the metal-containing compound, the conditions of drying of the zeolite after reaction with the treating compound, and the amount and type of binder incorporated with the zeolite.

Unlike prior art gallium-containing zeolites, in which the gallium is attached to the zeolite by impregnating the zeolite with a gallium solution, by an exchange reaction in which the cationic content of the zeolite is exchanged for gallium, or by a gel crystallization method in which gallium is incorporated into the lattice structure of the zeolite catalyst during the actual crystallization process, the process of the present invention is unique, in that gallium is inserted directly into the lattice framework of an existing zeolite crystal. Moreover, the present process provides a more crystalline gallo silicate, having a sharper FTIR Band and a higher degree of order than the gallium-containing silica zeolite formed by gel crystallization. In addition, the resultant gallosilicate has a higher Bronsted acidity than conventional gallium-containing zeolites. Further, because the process of the present invention begins with a highly ordered gallium-free zeolite, the method of preparing a zeolite in which gallium is inserted directly into the crystalline framework of the zeolite is more economical than that disclosed by the prior art.

The gallosilicate zeolites produced present process are useful in cracking and hydrocracking, and in other petroleum refining processes, indicating the unique catalytic characteristics of the family of zeolites. These processes include reduction of pour point of paraffinic chargestocks; isomerization of n-paraffins and naphthenes; polymerization of compounds containing an olefinic or acetylinic carbon-to-carbon linkage, such as isobutalene, butene-1 and butadiene; reforming, alkylation, isomerization of polyalkyl substituted aromatics, e.g., orthoxylene, and disproportionation of aromatics, such as toluene, to provide a mixture of benzene, xylenes and higher methylbenzenes; dehydration, hydration, and dehydrogenation.

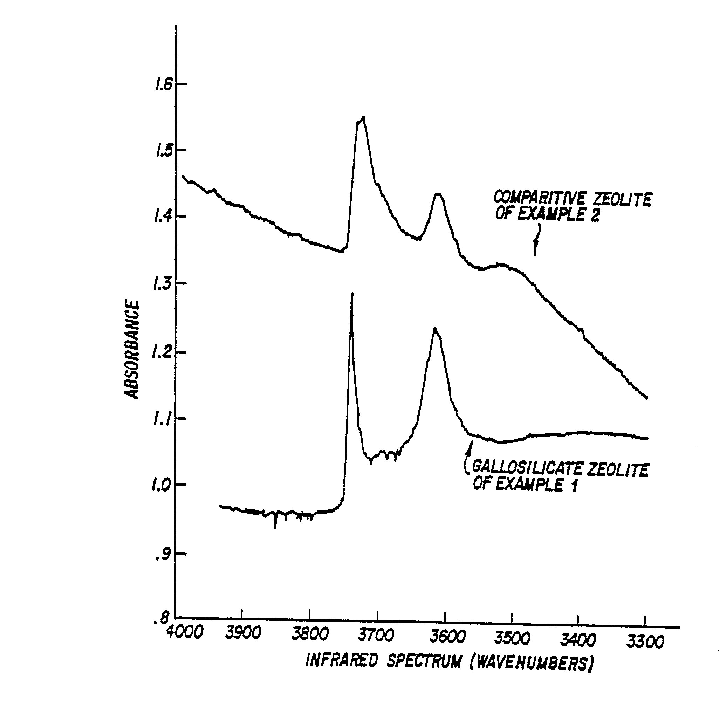

The following examples will now be described with reference to the accompanying drawing which is a Fourier Transform Infrared Spectrum (FTIR) comparing a gallosilicate zeolite of the present invention with' a gallium-containing zeolite prepared by gel crystallization.

Example 1

A gallosilicate zeolite was prepared by mixing 6 grams of a high silica HZSM-5 zeolite ($SiO_2/Al_2O_3$ = 26,000) with 300 cc of 0.2 N sodium hydroxide solution containing 1.5 grams of $Ga_2(SO_4)_3$. The zeolite solution was then refluxed for 2 hours, water-washed, converted into the ammonium form by exchange with $NH_4NO_3$, and dried at 100°C for 16 hours. The resultant zeolite had an exchange capacity of 0.5446 meq/g ash and N-hexane cracking activity in the hydrogen form of 803.

Example 2 (Comparative)

A solution of 27.8 g acid-extracted silica gel and 9.6 g sodium hydroxide in 40 cc of water was poured into a solution comprising 2.22 grams $Ga_2(SO_4)_3$, 10.6 grams $H_2SO_4$, 9.71 grams $Na_2SO_4$ 10 $H_2O$, and 12.32 grams tetrapropylammonium and bromide in 46 cc water. The mixture was heated to 160°C in an autoclave for approximately 7 days to bring about crystallization. After the crystallization period, the crystalline core material was filtered, washed, dried and calcined, and converted into ammonium form by exchange with $NH_4NO_3$.

As illustrated in the drawing, the gallosilicate zeolites of Examples 1 and 2 both show a characteristic band at 3620 cm-1. However, the high silica gallosilicate zeolite of Example 1 shows a much sharper hydroxyl band at 3740 cm-1 than the zeolite of comparative Example 2 indicating a more highly ordered, highly crystallized gallosilicate than the comparative zeolite.

**Claims**

1. A process for preparing a crystalline gallosilicate zeolite from an existing gallium-free crystalline silicate zeolite comprising the step of contacting said gallium-free crystalline silicate zeolite with gallium in an aqueous solution having a pH of at least 7 at a temperature of 50-250°c.

2. The process of Claim 1 comprising the further step of ammonium exchanging the product of the contacting step.

3. The process of Claim 2 comprising the step of heating the product of the ammonium exchanging step to convert the zeolite to the hydrogen form.

4. The process of any preceding Claim, wherein said gallium-free crystalline silicate zeolite has a silica/alumina mole ratio of at least 5000.

5. The process of any preceding Claim, wherein said gallium-free crystalline silicate zeolite has a silica/alumina mole ratio of at least 20,000.

6. The process of any preceding Claim, wherein said gallium-free crystalline silicate zeolite has a Constraint Index of 1 to 12.

7. The process of preceding Claim, wherein said gallium-free crystalline silicate zeolite is selected from ZSM-5, ZSM-11, ZSM-12, ZSM-23, ZSM-35, ZSM-38, ZSM-48 and zeolite beta..

8. The process of any preceding Claim, wherein said gallium-free crystalline silicate zeolite is ZSM-5.

9. The process of any preceding Claim, wherein said contacting step is conducted for 0 .5 hours to 8 days.

10. The process of any preceding Claim, wherein said contacting step is conducted at 80° to 110°C for 1 hour to 2 days.

11. The process of any preceding Claim, wherein the amount of said gallium incorporated into said gallium-free crystalline silicate zeolite is between 0.25 and 30 wt %.

12. The process of any preceding Claim, wherein the amount of said gallium incorporated into said gallium-free crystalline silicate zeolite is between 1 and 20 wt %.

COMPARITIVE ZEOLITE
OF EXAMPLE 2

GALLOSILICATE ZEOLITE
OF EXAMPLE 1

ABSORBANCE

INFRARED SPECTRUM (WAVENUMBERS)